(19) **Europäisches Patentamt / European Patent Office / Office européen des brevets**

(11) **EP 3 324 758 B1**

(12) **EUROPEAN PATENT SPECIFICATION**

(45) Date of publication and mention
of the grant of the patent:
**18.12.2019  Bulletin 2019/51**

(21) Application number: **16731132.3**

(22) Date of filing: **21.06.2016**

(51) Int Cl.:
$A23L\ 29/25^{(2016.01)}$      $A23L\ 27/10^{(2016.01)}$
$A23L\ 27/22^{(2016.01)}$      $A23L\ 27/23^{(2016.01)}$
$A23L\ 29/30^{(2016.01)}$      $A23L\ 23/00^{(2016.01)}$
$A23L\ 23/10^{(2016.01)}$      $A23L\ 29/212^{(2016.01)}$
$A23L\ 29/244^{(2016.01)}$      $A23L\ 29/269^{(2016.01)}$
$A23L\ 27/00^{(2016.01)}$

(86) International application number:
**PCT/EP2016/064271**

(87) International publication number:
**WO 2016/207142 (29.12.2016 Gazette 2016/52)**

(54) **FOOD CONCENTRATE FOR SOUP, SAUCE OR GRAVY**

LEBENSMITTELKONZENTRAT FÜR SUPPE ODER SAUCE

CONCENTRÉ ALIMENTAIRE POUR SOUPE OU SAUCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.06.2015  EP 15173867**

(43) Date of publication of application:
**30.05.2018  Bulletin 2018/22**

(73) Proprietors:
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**
- **Unilever PLC, a company registered in England and**
  **Wales under company no. 41424**
  **Greater London EC4Y 0DY (GB)**
  Designated Contracting States:
  **CY GB IE MT**

(72) Inventors:
- **SAILER, Winfried**
  **74074 Heilbronn Germany (DE)**
- **SCHUMM, Stephan, Georg**
  **3133 AT Vlaardingen (NL)**
- **SILVA PAES, Sabrina**
  **3133 AT Vlaardingen (NL)**

(74) Representative: **Tjon, Hon Kong Guno**
**Unilever Patent Group**
**Bronland 14**
**6708 WH Wageningen (NL)**

(56) References cited:
WO-A1-2004/049822    WO-A1-2012/097918
WO-A1-2012/097930    WO-A1-2012/097934
WO-A1-2014/009079    WO-A1-2014/053287
WO-A1-2014/053288

- ALVANI ET AL: "Gelatinisation properties of native and annealed potato starches", STARCH,, vol. 64, 27 February 2012 (2012-02-27), pages 297-303, XP002761436,

## Description

**Field of the invention**

The present invention relates to food concentrates. Food concentrates like soup, gravy and sauce concentrates are food products designed to provide for example a ready-to-eat soup, gravy or sauce upon dilution in water and usually heating.

**Background of the invention**

Starch is widely used in food products as a thickener. In the presence of sufficient water and when the temperature is high enough (usually more than 60°C) the starch granules start to swell. This process, also referred to as gelatinisation, is usually characterised by the loss of the crystalline structure (order-disorder transition) that can be observed by several techniques such as X-ray diffraction, Differential Scanning Calorimetry (DSC) (gelatinisation endothermic peak), and microscopy (loss of birefringence and granule swelling).

The native starches (i.e. unmodified) of different botanical sources differ in their appearance (granule form) and functional properties (e.g. pasting, viscosity). Most of the common starches are readily and unequivocally identifiable under a polarizing microscope, using the criteria of granule size and shape, form and positions (centric or eccentric) of the hilum (botanical centre of the granule) and brilliance of the interference cross under polarized light (Snyder,EM. (1984). Chapter XXII - Industrial microscopy of starches. In: Starch: Chemistry and Technology (Second Edition) Food Science and Technology, ed. R.L.W.PASCHALL San Diego: Academic Press, 661-673).. For example, potato starches are characterised by large oval granules, tapioca starch by spherical-truncated granules and corn starch by round granules. Sago starch granules are typically oval shaped with smooth surface and show an off centre hilum. These shapes can be easily observed by light microscopy or scanning electron microscopy. (Method Starc.03-Starch Identification (Microscopy)-B25. Analytical Methods of the Member Companies of the Corn Refiners Association, Inc. 1991) Depending on the botanical source of the starch its thickening properties may differ. Food technologists working with starches routinely apply two standard methods to analyse the gelatinisation behaviour and thickening properties of starches. The first one is the temperature when the gelatinisation starts: the $T_{onset}$ (temperature of onset of gelatinisation). The industry standard for measuring $T_{onset}$ is using Differential Scanning Calorimetry (DSC) (Biliaderis et al. (1980). Starch gelatinisation phenomena studied by differential scanning calorimetry. Journal of Food Science 45, 1669-1674). As water is heated with starch granules, gelatinisation occurs, involving an endothermic reaction. DSC provides a quantitative measure of the heat flow associated with the starch gelatinisation, and the endothermic peaks observed are indicative of melting.

The second standard method measures the increase in viscosity is known in the art as a "pasting" curve. It allows to distinguish - inter alia - starches that thicken relatively fast from so called delayed swelling starches. Pasting curves are routinely measured by a Rapid Visco Analyser (RVA) (Biliaderis,C.G. (2009). Chapter 8 - Structural Transitions and Related Physical Properties of Starch. In: Starch (Third Edition) Food Science and Technology, ed. J.BeMiller and R.Whistler San Diego: Academic Press, 293-372). An RVA is a rotational viscometer that continuously records the viscosity of a sample under conditions of controlled temperature and shear which can be used to measure the increase in viscosity and to provide an assessment of starch 'pasting'.

It has long been known that e.g. the thickening properties of a native starch of a botanical source can be modified chemically or physically. The most common chemical modification processes include acid treatment, crosslinking, oxidation, and substitution, including esterification and etherification. Physical modification methods involve the treatment of native starch granules under e.g. different temperature/moisture combinations, pressure, shear, and irradiation. Physical modification also includes mechanical attrition to alter the physical size of starch granules.

Native and modified starches have been used in sauces, gravies and soups. Many sauces, gravies and soups are sold as food concentrates like sachets of dry powdered sauce, gravy or soup concentrates. To prepare the ready-to-eat product the consumer usually dissolves these concentrates in an aqueous phase and applies a heating step to cook the starch.

In addition to dry concentrates, aqueous concentrates are known in liquid, paste or gelled formats. EP 1602289 and WO 2004/049822 disclose the use of a non-gelatinised potato starch in a shelf stable pasty concentrated composition in the presence of relatively high amounts of sorbitol. However, most consumers find sorbitol to be unacceptable in these type of products. But without sorbitol the liquid and fluid product of WO 2004/049822 could not be prepared (see example 11 of this application). Moreover, liquid and pasty formats tend to sticky and difficult to unit-dose. WO2012/097930 relates to a gelled concentrate which can be easily unit-dosed. In particular, WO2012/097930 discloses a gelled concentrate with non-gelatinised native corn starch, pea starch, waxy corn starch or heat moisture treated potato starch. However, to obtain a desired viscosity in the ready-to eat product, the high levels of starch needed posed a problem for obtaining a gel structure. This was solved by including a liquid polyol (glycerol). However, like sorbitol said liquid polyols are not desirable ingredients for a gravy, soup or sauce. WO 2012/097918 and WO 2012/097934 avoid the combination of non-gelatinised starch and polyol. Instead WO 2012/097918 and WO 2012/097934 disclose gelled concentrates with a salt sensitive gum to provide binding in the ready-to-eat product.

A food concentrate will have a relatively high amount of starch depending on the dilution factor it has been designed for and the desired viscosity of the ready-to-eat product. A food concentrate designed to be diluted 10 times to prepare the ready-to-eat product will have a 10 times higher amount of starch than in the ready-to-eat products. These high amounts of starch in the concentrate may lead to lumping problems when the consumer tries to dilute the concentrates. Starches have been modified to decrease the lumping problem in dry or even pasty concentrates. For example, WO 2014/053287 and WO 2014/053288 disclose as most preferred starch native corn and heat moisture treated (HMT) potato starch for low lumping. It has been reported that using the proper dilution protocol low or even no lumping may be obtained with native corn starch and HMT potato starch. However, some consumers have reported that gelled food concentrates with native corn or HMT potato starch still tend to show an undesirable level of lumping.

Although the applicants do not wish to be bound by theory it is hypothesised that this may be due to conflicting requirements of holding large amounts of non-gelatinised starch in shape stable form.

The lump formation may be exacerbated if consumers do not strictly follow the instructions for the dilution of the concentrate. While some starches show decrease in lumping at the same time these starches show little thickening effect in the ready to eat product.

Therefore, it would be desirable to provide a food concentrate with high amounts of starch in the form of gel without the need for polyols such that after dilution a sufficient viscosity is obtained in the ready-to-eat product. In addition, it would also be desirable to provide a more robust concentrate which shows a decreased lump formation during hot dilution. To provide such concentrates a more sensitive protocol was developed wherein even known low lumping starches like HMT potato starch and native corn starch resulted in undesirable lumping. WO 2014/009079 discloses gelled concentrates with starches with a low gelatinization temperature.

## Summary of the invention

Surprisingly, the present invention provides food concentrates without the need for polyols and which result in an improved reduction in lump formation combined with the desired viscosity in the end product. Accordingly the present invention provides a food concentrate in the form of a gel, said food concentrate preferably comprising

a) 35 to 70 wt% of water by weight of the total food concentrate;
b) 15 to 40 wt% of salt by weight of the total water content of the food concentrate;
c) an effective amount of a taste booster selected from glutamate, 5'-ribonucleotides, sucrose, glucose, fructose, lactic acid, citric acid and mixtures thereof;
d) 10 to 40 wt% by weight of the total food concentrate of a delayed-swelling physically modified non-gelatinised starch characterised by Ref $T_{onset}$ of at least 74°C;
e) an effective amount of the combination of xanthan with at least one galactomannan and/or glucomannan to obtain a gel, preferably said effective amount is 0.2 to 5 wt% of the combination of xanthan with at least one galactomannan and/or glucomannan by weight of the total water content of the food concentrate.

The present invention provides a food concentrate in the form of a gel said food concentrate comprising

a) 35 to 70 wt% of water by weight of the total food concentrate;
b) 15 to 40 wt% of salt by weight of the total water content of the food concentrate;
c) an effective amount of a taste booster selected from glutamate, 5'-ribonucleotides, sucrose, glucose, fructose, lactic acid, citric acid and mixtures thereof;
d) 10 to 40 wt% of non-gelatinised annealed sago starch and/or non-gelatinised annealed corn starch by weight of the total food concentrate;
e) an effective amount of the combination of xanthan with at least one galactomannan and/or glucomannan to obtain a gel, preferably said effective amount is 0.2 to 5 wt% of the combination of xanthan with at least one galactomannan and/or glucomannan by weight of the total water content of the food concentrate.

In addition the present invention provides a process for preparing a concentrate according to the invention, a process for using a concentrate according to the invention to prepare a ready-to-eat product, a ready-to-eat product obtainable by this process by diluting a concentrate according to the invention and the use of concentrate according to the invention to prepare a soup, a sauce or a gravy.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages by weight of the total food concentrate unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

### Food concentrate

The food concentrate according to the invention is designed to provide a ready-to-eat product after an appropriate dilution and heating with an aqueous phase such that the starch provides the desired viscosity in the ready-to-eat product. The term dilution in this respect is intended to include dissolving and dispersing as these take place concurrently. The level of salt and other taste ingredients in the food concentrate is determined by the desired level in the ready-to-eat product and the dilution rate. In a ready-to-eat product, preferred amounts are more than 50 wt% water, 0.5-1.5 wt% of salt, 2-4 wt% of starch and more than 1 wt% of savoury booster. The ready-to-eat product is preferably a soup, gravy or a sauce. The sauce may be part of dish like a stew or a risotto. The dilution of a food concentrate according to the invention is usually between 20g/L and 350g/L and more preferably between 50g/L and 250g/L. The term "food concentrate" and "concentrate" are used interchangeably.

The level of water, salt, starch and other taste ingredients in the food concentrate are determined by the desired level in the ready-to-eat product and the dilution rate. The amount of salt in the food concentrate and intended dilution rate is preferably such that after the dilution the level of salt is preferably at least 0.25 wt%, more preferably at least 0.5 wt%, more preferably at least 0.7 wt% and at preferably at most 2 wt%, more preferably at most 1.7 wt%, more preferably at most 1.3 wt% by weight of the total water content of the ready-to-eat product. The amount of starch in the food concentrate and intended dilution rate is preferably such that after the dilution the amount of starch in the ready-to-eat product is preferably at least 1 wt%, preferably at least 2 wt%, most preferably at most 6 wt%, preferably at most 7 wt% by weight of the total water content of the ready-to-eat product. The total amount of water present in the ready-to-eat product is preferably at least 50 wt%, more preferably at least 65 wt%, more preferably at least 75 wt% and preferably less than 97 wt%, preferably less than 95 wt% preferably less than 90 wt% by weight of the total food concentrate. (Water may be added as such or as part of other ingredients like cream or milk). Details and other preferred ranges of salt, starch, water and other ingredients are described below.

### Starch

Surprisingly, it was found that food concentrates according to the invention can be successfully formulated with a specific physically modified non-gelatinised starch. The non-gelatinised starch used in the present invention is a delayed-swelling physically modified non-gelatinised starch having a Ref $T_{onset}$ of at least 74°C.

### Ref $T_{onset}$ measured by Differential Scanning Calorimetry (DSC)

$T_{onset}$ of a given starch is measured by measuring the gelatinisation of starch in a reference DSC-solution. The latter is adjusted to reflect the product application. For example if the product application would be a sweet pudding, the reference DSC-solution will have correspondingly high amounts of sugar. For the present invention the reference DSC-solution (Ref DSC-solution) has a high amount of salt and less sugar: 20.7 wt% NaCl, 12.7wt% sucrose, 66.6% water and the $T_{onset}$ measured in this reference Ref DSC-solution is referred to the Ref $T_{onset}$.

The preferred physically modified starches show a characteristic increase in Ref $T_{onset}$ compared to the native starch of the same botanical source. In addition to the Ref $T_{onset}$ determined in the Ref DSC solution, the $T_{onset}$ may also be determined in the concentrate (Prod $T_{onset}$). The increase in the Ref $T_{onset}$ of a physically modified starch like annealed starch can also be found by comparing the Prod $T_{onset}$ of the physically modified starch to the Prod $T_{onset}$ of the native starch of the same botanical source, in the same composition.

Delayed-swelling starches as determined by pasting curve

Pasting curves are measured by a Rapid Visco Analyser (RVA) - a rotational viscometer that continuously records the viscosity of a sample under conditions of controlled temperature and shear which can be used to measure the increase in viscosity and provide an assessment of starch 'pasting'. For the purpose of the present invention delayed-swelling starches are defined according the test described in detail below.

The non-gelatinised starch used in the invention is obtained by a physical modification of native starch like annealing and/or heat moisture treatment. The non-gelatinised starch used in the invention is preferably an annealed starch. Annealed starch can be obtained by annealing starch as known in the art e.g. from Tester, R.F. and Debon, S.J.J. Annealing of starch - a review. International Journal of Biological Macromolecules, 27, 1-12. 2000. Briefly, annealing of starch may be described as a physical treatment whereby the starch is incubated in excess water (e.g. >60% w/w) or intermediate water content (e.g. 40 to 55% w/w) at a temperature between the glass transition temperature and the gelatinisation temperature for a certain period of time. After the annealing process, the starch granules remain non-gelatinised. Preferred annealed starches are delayed swelling starches, preferably with a Ref $T_{onset}$ of at least 74°C, more preferably of at least 76°C, more preferably at least 78°C, most preferably at least 79°C, and preferably at most 100°C, more preferably at most 95 °C.

A delayed swelling physically modified starch according to the invention may be prepared with a process comprising the following steps:

a) Heating a water slurry of non-gelatinised native starch (excess water, preferably with a (w/w) ratio of water: starch of higher than 2:1 more preferably higher than 3:1) to a temperature of from e.g.55 to 68 °C and kept to this temperature for a period of at least 2h, preferably at least 3h, preferably less than 24h. This step can be performed under mild stirring. The temperature should be maintained below the Tonset of the starch in the aqueous slurry so the starch remains non-gelatinised during the process.

b) Removing the excess water (e.g. by sedimentation and filtering) and drying the starch at a temperature and conditions such that it remains non-gelatinized. (e.g. vacuum dried, T< 60°C).

Optionally the heating step a) can be performed in multiple phases of e.g. increasing temperature to obtain a higher shift in the onset of gelatinization and prevent any unwanted starch gelatinization at the beginning of the process, specially for starches which have a natural lower Tonset. For example 1h at 60°C followed by one hour at 63°C followed by one hour at 65°C etc.
Optionally, the heating step a) may be carried out in a salt containing solution e.g. at least 15% NaCl, preferably at least 20 wt% NaCl by weight of the starch-water slurry whereby the slurry is heated to a temperature of from 60 to 73 °C whereby the remaining conditions are as described above.

Although it is not preferred, the starch may be further modified by any means known in the art.

The non-gelatinised starch in the concentrate of the invention can be isolated from the concentrate by diluting the concentrate in water at a temperature below the gelatinisation temperature of the starch e.g. 50-60 °C. Ref $T_{onset}$ and delayed swelling of the isolated non-gelatinised starch can be characterised as described herein.

An annealed non-gelatinised starch useful in the invention may also be modified by an additional physically modification like heat moisture treatment. Annealing and physical modification are well known in the art (Stute,R. (1992). Hydrothermal Modification of Starches: The Difference between Annealing and Heat/Moisture -Treatment. Starch/Starke 44, 205-214; Annealing of starch - a review. International Journal of Biological Macromolecules 27, 1-12.)

The non-gelatinised starch used in the invention preferably has an average diameter of more than 10 micrometer, more preferably more than 12 micrometer, more preferably more than 15 micrometer, most preferably more than 18 micrometer. Starch granule size can be measured for example by suspending the non-gelatinised starch granules in water and observing the granule sizes by light microscopy or a particle size analyzer as known by person skilled in the art. Starch granules have sizes ranging from invisible under light microscope to up to more than 100 micrometers. For estimating the average granule size by using light microscopy, for example, images from separate areas each with at least 200 starch granules are randomly recorded. Three images are used to measure starch granules sizes. The starch granules are labelled manually, and the sizes are automatically measured in micrometers by suitable image analysis software. Further details can be found in Snyder,EM. (1984) as cited above.

The non-gelatinised starch used in the invention is preferably from the following botanical source: corn, arrowroot, sago, waxy corn, wheat, tapioca, yam and mixtures thereof. Most preferably the starch is annealed sago starch. Annealed sago starch is well known in the art (Wang,W.J., Powell,A.D., and Oates,C.G. (1997). Effect of annealing on the hydrolysis of sago starch granules. Carbohydrate Polymers 33, 195-202; Jayakody,L. and Hoover,R. (2008). Effect of annealing on the molecular structure and physicochemical properties of starches from different botanical origins: A review. Carbohydrate Polymers 74, 691-703).

The amount of non-gelatinised starch is at least 10 wt%, more preferably at least 12 wt% and 15 wt%, preferably at most 40 wt% more preferably at most 35 wt%, most preferably at most 32 wt% by weight of the total concentrate. The amount of starch in the ready-to-eat product is preferably at least 1 wt%, preferably at least 2 wt%, most preferably at most 6 wt%, preferably at most 7 wt%. The w/w ratio of water to non-gelatinised starch (on dry basis) in the food concentrate is preferably higher than 1.4, preferably higher than 1.5, more preferably higher than 1.65, more preferably higher than 1.8, preferably at most 7, more preferably at most 5. Although starch may contain some water depending on the source, the amounts in the present invention are calculated as the dry matter.

The w/w ratio of non-gelatinised starch to salt in the total food concentrate is preferably at least 0.8, even more preferably at least 1, even more preferably at least 1.5, even more preferably at least 2, and more preferably at most 10, more preferably at most 8, most preferably at most 5.

It is understood that the preferred features of the non-gelatinised starch used in the invention as described can be combined, i.e. preferred botanical source with preferred physical modification, preferred Ref $T_{onset}$ and delayed swelling.

Reduction in lumping

Preferably, the concentrate according to the invention has a reduction in lumping in the test described below of preferably at least 15%, more preferably at least 20%, more preferably at least 30%, more preferably at least 40%, more preferably at least 50% and preferably at most 100% when compared to the same concentrate except that the starch according to invention is replaced by the native starch from the same botanical source. For example: Lumping reduction (in %) = (1- Lumping in composition with annealed sago/ Lumping in composition native sago)*100. Thus, if a concentrate with native sago results in 80% lumping and the same concentrate with annealed sago in 10% lumping, the reduction in lumping is 87.5% ((1-10/80)*100%). A reduction in lumping of x% as described herein may also referred to as a Reduced Lumping Factor (RLF) of-x. Accordingly, the concentrate according to the invention has a RLF of preferably at least -15, more preferably at least -20 more preferably at least -30, more preferably at least -40, more preferably at least -50 and preferably at most -100.

Viscosity of the ready-to-eat product

Preferably the food concentrate according to the invention provides a ready-to-eat product having viscosity of at least 10 mPa.s, preferably at least 20 mPa.s preferably more preferably at least 30 mPa.s, most preferably at least 50 mPa.s at 60°C. The viscosity is preferably measured as detailed below.

Gelling agents

The food concentrate of the present invention comprises an effective amount of the combination of xanthan with at least one galactomannan and/or glucomannan to obtain a gel, preferably said effective amount is at least 0.2 wt%, preferably at least 0.4 wt%, more preferably at least 0.6 wt%, more preferably at least 0.8 wt%, even more preferably at least 1 wt% and preferably at most 5 wt%, more preferably at most 4 wt%, more preferably at most 3 wt%, more preferably at most 2.5 wt%, even more preferably at most 2 wt% of the combination of xanthan gum with at least one galactomannan and/or glucomannan, based on the total water content of the food concentrate.

Preferably, the galactomannan used in combination with xanthan gum is selected from the group consisting of: locust bean gum, carob flour, guar gum, fenugreek gum, tara gum, cassia gum, and mixtures thereof. Examples of preferred glucomannans used in combination with xanthan are konjac mannan, konjac flour and mixtures thereof. Preferably the present invention comprises the combination of xanthan gum with locust bean gum, the combination of xanthan gum with guar gum, and mixtures thereof. Most preferably, the present invention comprises the combination of xanthan gum with locust bean gum. The latter combination with locust bean gum showed optimal results in terms of gel firmness and reduced syneresis. The use of these combinations of gelling agents is known from e.g. EP 1 962 619. Although it is not preferred, additional gelling agents may be used. Gums may be supplied as a preparation with additives like sugar. It is understood that the amounts above relate to the gums only.

Preferably, xanthan gum is combined with a galactomannan or a glucomannan in a weight: weight ratio of xanthan gum to galactomannan and/or glucomannan of from 90:10 to 10:90, more preferably of from 85:15 to 15:85, even more preferably of from 80:20 to 20:80, even more preferably, of from 75:25 to 25:75 more preferably 70:30 to 30:70, even more preferably 10:90 to 50:50.

Gel

The present invention relates to a food concentrate in the form of a gel. In the context of the present invention, a gel should be understood as a texture that is substantially shape stable at 20 °C and is elastic, e.g. after removal from the packaging. Due to gravity, a relatively weak gel might (slightly) deform, after removal from its packaging. The form of a gel generally can be achieved in an aqueous environment when sufficient gelling agent is used in the formulation. For the present invention, a too rigid gel is not preferred, as this may impair the easy removal from the packaging or the spoonability when the product is packaged in a multidose packaging, like jar. The gel structure should allow removal from a plastic tub preferably without significant damage, possibly with the help of a spoon. A gel shows elastic deformation. This type of deformation is to a large extent reversible. For example, after reducing deforming pressure, e.g. from gravity or gentle pressure by a finger, the shape will reform to a large extent to its original form. In addition, at 20° C, a gel in the context of the present invention does not flow, like a liquid. Further, at ambient temperatures (e.g. at 20° C), after cutting of the gel in some pieces, the pieces of gel cannot be substantially adhered and united by simple re-assembling of the gel pieces, to form the original volume of the gel. The latter is possible with a paste. As known in the art, at 20°C a gel is normally solid, i.e. not a pourable liquid. In normal use, a consumer cannot pour the food concentrate from its packaging, but can be removed as one piece, which maintains its shape (shape stable). Indeed, a solid gel is not considered to have a viscosity, which can be measured with for example in a Brookfield viscosimeter, as the texture of the solid gel would break during measurement. This should be understood, as that the food concentrate in the form of a gel can deform under gentle pressure or gravity to some extent, depending on how strong the gel is. The elasticity usually can restore a gel to the original shape after removal of the pressure. The food concentrate is therefore preferably an elastic gel.

The texture of a gel can preferably be assessed in the following manner, using a texture analysis machine (TAX-T2) of Stable Micro Systems or similar. The method is based on a standard measurement called TPA (Texture Profile Analysis), as known for a skilled person and as described for example in "Gums and Stabilisers for the Food Industry 6", edited by G.O. Phillips, P.A. Williams and D.J. Wedlock (published by Oxford University Press, 1992). The product with minimum dimensions of 45 mm length / 30 mm width / 10 mm height, in the packaging (e.g. a plastic tub), is compressed twice by 2.5mm with a 5 mm diameter spherical (ball) probe (P/5S, stainless steel), to create a small deformation of the surface of the product. The TA-parameters are: Pre-speed 1 mm/s, Test speed 0.5 mm/s, Post-Test speed 1mm/s, Distance 2.5 mm, Second Distance 2.5 mm, Trigger Auto, Trigger Force 0.0 g, Load cell 500g to 5kg. For an elastic gel, the force required for the second deformation step is similar to the force required for the first deformation step. This is because of the elastic character of the gel. The time between the two measurements points is sufficient to allow a possible reformation of the gel structure after the first deformation. Typically, the time between the measurements is 10 seconds. For a gel a described in this invention, typically the force required for the second deformation is higher than 85%, preferably higher than 87%, most preferably higher than 90% of the force required for the first deformation.

Preferably, the gel firmness measurement is also carried out using a Texture Analyser TA - XT2 or similar (Stable Micro Systems Ltd). The gel firmness_measurements are performed after at least 12h maturation time after the samples have solidified. A longer maturation time of for example 24h to 48h is preferred.

a. The samples are equilibrated to room temperature for at least 2h, preferably more than 4h, prior to measurement.
b. The machine and sample container specifications are as follows:

- Container (125 ml polypropylene cup), 52 mm diameter
- Sample height: at least 25 mm
- Equipment: Texture Analyser Stable Microsystems (or similar)
- Probe: 1/2 inch cylinder, smooth edges (P/0.5 - 0.5 inch diameter cylinder probe, Delrin)
- The following settings are used:

  • Load cell: 500g to 30kg
  • Compression mode
  • Pre-test speed =10 mm/s
  • Test speed =5 mm/s
  • Post-test speed=10 mm/s
  • Trigger force = 3 g
  • Penetration depth=10 mm (measurement error can be typically of 0.1-0.2 mm).

c. Values of parameters below are presented as average and with a standard deviation of at least duplicates.

The following relevant parameters are used to characterise the gels according to this invention and are measured using a penetration test Force (in g) vs. Distance (in mm) with a texture analyser according to the method as described above.

The concentrate of the invention is not liquid, but has a semi-solid texture with certain firmness. The firmness is determined as the maximum force in the penetration test (expressed in g). Preferably, the food concentrate should also have a certain firmness: preferably the firmness should be such that the maximum force (in g) recorded while the probe penetrates 10 mm into the food concentrate is typically above 20g, preferably above 30g, more preferably above 50g, preferably less than 1000g, more preferably less than 500g most preferably less than 350g. For an elastic gel such like the gel concentrates of this invention, the maximum force is typically observed at a distance (in the Force vs. Distance curve) higher than 7mm, preferably higher then 8mm more preferably higher than 9 mm.

Water

The food concentrate contains water. In the context of the present invention the total water content in the food concentrate includes both water added as such and water as part of other ingredients like vegetables, unless otherwise indicated. E.g., the amount of water in the examples indicated as ingredient is added as such. The food concentrate comprises preferably at least 35 wt%, preferably at least 38 wt%, preferably at least 40 wt%, more preferably at least 42 wt% and preferably at most 65 wt%, more preferably at most 60 wt%, even more preferably at most 55 wt%, of water based on total weight of the food concentrate. The water content in the food concentrate can be measured by any standard method including drying the food concentrate and comparing the weight before and after drying. Thus, when the amount of salt or gelling agent is expressed by weight of the water content of the food concentrate this includes both water added as such and water of other ingredients in the food concentrate.

Polyol

Surprisingly, the concentrate according to the invention requires no liquid polyol or sorbitol as suggested in WO2012/097930 and WO 2004/049822, respectively. As noted in WO2012/097930 a polyol (polyhydric alcohol or sugar alcohol) is commonly known in the art as an alcohol containing multiple hydroxyl groups. It is thus a hydrogenated form of a carbohydrate. A polyol is different from a fat. A fat is not a carbohydrate, a fat molecule is either a mono-, di-, or triacylglyceride and thus a different chemical substance and not a liquid polyol. For the present purpose a liquid polyol is preferably understood to be selected from the group of glycerol, polypropylene glycol and mixtures thereof. Preferably, the food concentrate according to the invention comprises less than 5 wt%, preferably less than 3 wt%, more preferably less than 1 wt%, more preferably less than 0.1 wt% of a liquid polyol by weight of the total food concentrate. Most preferably, no liquid polyol is present at all. Preferably, the food concentrate according to the invention comprises less than 5 wt%, preferably less than 3 wt%, more preferably less than 1 wt%, more preferably less than 0.1 wt% of glycerol by weight of the total food concentrate. Most preferably, no glycerol is present at all.

Preferably, the food concentrate according to the invention comprises less than 5 wt%, preferably less than 3 wt%, more preferably less than 1 wt%, more preferably less than 0.1 wt% of a sorbitol by weight of the total food concentrate. Most preferably, no sorbitol is present at all. It is understood that the expression "less than" includes 0wt%.

Salt

The food concentrate preferably comprises at least 15 wt%, more preferably at most 40 wt% of salt, based on the water content of the food concentrate. The water content of the food concentrate combines water added as water and water present in other ingredients of the food concentrate like fresh vegetables. Salt is added to provide a salty taste. The salt preferably comprises NaCl, KCl and mixtures thereof. The high level of salt is predominantly present to provide the desired salty taste impact after dissolution in a relatively high volume. As common in the art, the salt content, preferably NaCl, in this context is calculated as ((amount of salt)/(amount of salt + amount of water))*100%. At a level of higher than 26.5 wt% on water, NaCl starts to crystallise, and the food concentrate might contain some salt crystals. Preferably, the amount of salt in the food concentrate is at least 15 wt%, preferably at least 20 wt%, and preferably at most 35 wt%, more preferably at most 31 wt%, most preferably at most 26.5 wt%, based on the weight of the water content of the food concentrate. Preferably, the amount of NaCl in the food concentrate is at least 15 wt%, preferably at least 20 wt%, and preferably at most 40 wt%, more preferably at most 35 wt%, more preferably at most 31 wt%, most preferably at most 26.5 wt%, based on the weight of the water content of the food concentrate. The salt in the food concentrate is preferably dissolved. The food concentrate according to the invention preferably has a water activity of between 0.60 and 0.95, more preferably of between 0.65 and 0.90 even more preferably between 0.70 and 0.90, even more preferably between 0.72 and 0.85, most preferably between 0.72 and 0.79.

Savoury taste booster

The food concentrate is preferably a savoury food concentrate, for example for preparing a bouillon, a soup, a sauce, a gravy or a seasoned dish. To contribute to the savoury taste, the food concentrate of the present invention may further comprise a savoury taste booster selected from the group consisting of glutamate, 5'-ribonucleotides, sucrose, glucose, fructose, lactic acid, citric acid and mixtures thereof. The term savoury taste booster used in the singular may refer to a single compound or a mixture of more than one taste booster compounds. The term "savoury taste booster" is used interchangeably with the term "taste booster". The amount of savoury taste booster present in the food concentrate is present in an effective amount to obtain the desired level in the ready-to-eat product. The effective amount depends on the desired dilution rate and amount in the ready-to-eat product. The amount of savoury taste booster in the concentrate is preferably present in an amount of at most 40 wt%, more preferably of at most 30 wt%, more preferably in an amount at most 25 wt%, most preferably in an amount of at most 15 wt%, and preferably at least 0.1 wt%, more preferably at least 0.5 wt%, more preferably at least 1 wt%, more preferably at least 5 wt%, based on the weight of the total food concentrate. A savoury taste booster as mentioned above may be present in an amount at most 40 wt%, more preferably of at most 30 wt%, more preferably in an amount at most 25 wt%, most preferably in an amount of at most 15 wt%, and preferably at least 0.1 wt%, more preferably at least 0.5 wt%, more preferably at least 1 wt%, more preferably at least 5 wt%, based on the weight of the total food concentrate. It is understood that any savoury taste booster compound can be added as such or as part of more complex food ingredients like yeast extract; hydrolyzed proteins of vegetables-, soy-, fish-, or meat-origin, malt extract, beef flavourings, onion flavouring, liquid or dissolvable extracts or concentrates selected from the group consisting of meat, fish, crustaceans, herbs, fruit, vegetable and mixtures thereof.

A food concentrate according to invention preferably comprises

a) 35 to 70 wt% of water by weight of the total food concentrate;
b) 15 to 40 wt% of salt by weight of the total water content of the food concentrate;
c) 1 to 40 wt% by weight of the total food concentrate of a taste booster selected from glutamate, 5'-ribonucleotides, sucrose, glucose, fructose, lactic acid, citric acid and mixtures thereof;
d) 10 to 40 wt% by weight of the total food concentrate of a delayed-swelling non-gelatinised annealed starch characterised by Ref Tonset of at least 74°C; wherein the non-gelatinised starch is annealed sago starch and/or annealed corn starch;
e) 0.2 to 5 wt% by weight of the total water content of the food concentrate of the combination of xanthan and locust bean gum to obtain a gel;
f) less than 5 wt% of liquid polyol by weight of the total food concentrate;
g) less than 5 wt% of sorbitol by weight of the total food concentrate;.

wherein the weight:weight ratio of xanthan to locust bean gum is from 10 : 90 to 50 : 50; and
wherein the food concentrate has a firmness of above 30g, more preferably above 50g and less than 500g most preferably less than 350g;
wherein the food concentrate provides a ready-to-eat product having viscosity of at least 10 mPa.s, preferably at least 20 mPa.s, more preferably at least 30 mPa.s , most preferably at least 50 mPa.s at 60°C, wherein said ready-to-eat product is a a soup, sauce or gravy.

Process of preparing a food concentrate

In a further aspect, the invention relates to a process for preparing a food concentrate as described, preferably comprising

a) 35 to 70 wt% of water by weight of the total food concentrate;
b) 15 to 40 wt% of salt by weight of the total water content of the food concentrate;
c) an effective amount of a taste booster selected from glutamate, 5'-ribonucleotides, sucrose, glucose, fructose, lactic acid, citric acid and mixtures thereof;
d) 10 to 40 wt% by weight of the total food concentrate of a delayed-swelling physically modified non-gelatinised starch characterised by Ref $T_{onset}$ of at least 74°C;
e) 0.2 to 5 wt% of the combination of xanthan with at least one galactomannan and/or glucomannan by weight of the total water content of the food concentrate.

the process comprising the steps of:

i) preparing a mixture comprising:

- water,
- the combination of xanthan with galactomannan and/or glucomannan,

ii) heating said mixture, preferably to higher than 75°C;

iii) admixing the non-gelatinised starch to the mixture at a temperature which is lower than the Tonset of the non-gelatinised starch, preferably less than 74°C,
whereby salt, taste booster and any optional ingredient may be admixed at any one of steps i) to iii);
optionally, filling the mixture of step iii) into a packaging; and
iv) allowing the mixture to form a food concentrate in the form of a gel.

In a first step i), a mixture is provided comprising the combination of xanthan with galactomannan and/or glucomannan and at least part of the water. The water may be heated to at least 30°C, preferably at least 40°C to allow better mixing.

In step ii) the mixture of water and the combination of xanthan with galactomannan and/or glucomannan is heated. The temperature is preferably higher than 75 °C, most preferably higher than 80 °C, and preferably less than 105 °C, more preferably less than 100 °C, most preferably less than 95 °C. Heating of the mixture of step i) results_in dissolving of the gelling agent and activating it to allow gelling after cooling, e.g. during step iv) of the process. Preferably, the heating of step ii) provides pasteurization of the mixture. It might be preferred to use high shear mixing at a temperature above the activation temperature of the gelling agent to provide optimal activation of the combination of xanthan gum with galactomannan and/or glucomannan.

In step iii) the mixture is optionally cooled and the non-gelatinised starch is admixed at a temperature which is lower than the Tonset of the non-gelatinised starch, preferably less than 74°C, preferably less than 72 °C, more preferably less than 70 °C most preferably less than 68 °C, preferably above 53 °C, more preferably above 55 °C. This can be suitably done by mixing the non-gelatinised starch into the mixture resulting from step ii), preferably by a mixing device. Applied high shear stress is preferably limited to a minimum, for example, only to guarantee homogeneous starch distribution. However, unnecessary stress to the gel is preferably avoided, especially when starch is added close to the gelling point of the gel system. Cooling might be carried out by a cooling device like a tube-in-tube heat exchanger, as known in the art, but might also be suitably done by allowing the mixture to cool in the processing vessel.

Salt, tastebooster and any optional ingredient may be added at step i), ii), or iii). Preferably, all ingredients, except for the starch, are added during step i). Addition of ingredients after step ii) might require a high shear mixing because of a viscosity increase, which may not be preferred.

Optionally, the mixture of step iii) is filled into a packaging before step iv).

In step iv), the mixture is allowed to form a gel. Step iv) might comprise a cooling step, wherein the concentrate is cooled by any suitable cooling means, preferably to a temperature lower than the gelling temperature of the gelling agent used in the mixture of step i). Alternatively, the mixture is allowed to cool passively by leaving it ambient temperature (20°C) such that it forms a gel at ambient temperature. The time needed for the gel to set may depend on the amount of gelling agents and other ingredients. Weaker gels may take more time than stronger gels.

A package preferably is a package selected from the group consisting of a tub, a cup, a jar, a doy pack and a stick pack. The filling of the package is preferably carried out by pouring the mixture resulting from step iii) into the package. Preferably, the concentrate is a packaged concentrate, whereby the concentrate (excluding the packaging) has weight of at least 10g, preferably at least 20g, preferably less than 1 kg, more preferably less than 50g. Preferably, the concentrate is unit dosed having a weight of at least 10 g and less than 50g.

The present invention also relates to a food concentrate obtainable by the process as described above.

Use

Preferably, the invention relates to the use of the concentrate of the present invention to prepare a soup, a sauce or a gravy. At least part of the concentrate in the form of a gel is preferably mixed with a hot aqueous phase and diluted in it. The term "dilution" is used interchangeably with the terms "dissolving" and "dispersing". If preferred, the concentrate of the present invention can be added to a pan directly with sufficient amount of water. Optionally other ingredients required for the soup, sauce or gravy can be added before or after the concentrate like vegetables and/or meat. However, to calculate the amount of salt and starch in the ready-to-eat product such solid ingredients are excluded because the salt and starch will mainly dissolve in the aqueous phase only. Preferably the aqueous phase has a temperature higher than the dissolution/melting temperature of the gelling agent which is used in the concentrate in the form of a gel. Preferably, the temperature of the hot aqueous phase is between 60°C and 95°C, more preferably of between 75 and 90°C. During dilution, but preferably thereafter, the mix of the concentrate of the present invention and the aqueous phase is preferably heated or heating is continued to cook-up the mixture. Continuous heating improves dissolving of the concentrate in the form of a gel and induces the viscosity increase as a consequence of gelatinisation of the starch. It might be preferred that the concentrate in the form of a gel is first dissolved in the aqueous phase, preferably in water, of a temperature of below 95°C, before cooking up. Cooking up is preferred to achieve the final viscosity. An optimal preparation mode is dependent on the type of gelling agent used, on the gel firmness, the exchange surface area between gel and the aqueous liquid, on the gelatinisation temperature of the starch, and on further starch characteristics of the starch which is used. However, it is in the art of a skilled artisan to find out what the optimal temperature and heating time is for a specific food concentrate. A preferred cooking time may be between 20 s and 10 min, preferably between 30 s and 8 min, more preferably between 45 s and 5 min, preferably at boiling temperature.

A person of average skill is able to optimize the food concentrate depending on the preferred preparation mode or preparation requirements or the desired application for the consumer. For example a food concentrate for a stew may be simmered for hours. Hence, preferably the present invention relates to a process to provide a ready-to-eat food product, comprising the steps of:

a) providing a food concentrate of the present invention,
b) admixing at least part of the food concentrate to an aqueous phase,
c) heating the mixture resulting from step b) to a temperature higher than the Ref $T_{onset}$ of the starch used, such as to achieve a viscosity increase of the mixture to result in a ready-to-eat food product, whereby the dilution in step b) is preferably between 20g/L and 350g/L and more preferably between 50 and 250g/L. Preferably the heating step bringing the mixture to boiling temperature as described above.

The present invention also relates to a ready-to-eat food product obtainable by the process as described above.

## Tests

I Ref $T_{onset}$: Reference temperature of onset of gelatinisation of starch in reference solution

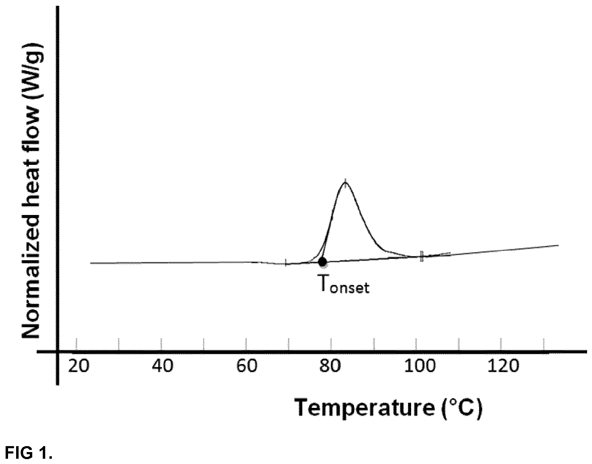

As mentioned above a person skilled in the art of starch routinely uses Differential Scanning Calorimetry (DSC) to measure the $T_{onset}$ of a given starch sample to evaluate its gelatinisation properties. A typical DSC curve and the $T_{onset}$ according to this procedure is shown in Fig 1 (Temperature vs Normalized heat flow, with endothermic events pointing upwards on the y axis)

The Ref $T_{onset}$ is the $T_{onset}$ measured in a reference solution, preferably measured using a Differential Scanning Calorimetry (DSC) comprising the steps of:

- preparing a mixture of 12 to 16 mg of starch and 40-50 $\mu$L of Ref DSC-solution resulting in a w/w ratio of 1:2.5 to 1:3 in a DSC sample pan (60 $\mu$L high pressure stainless steel) whereby the Ref DSC-solution contains 20.7wt% NaCl, 12.7 wt% sucrose and 66.6% water;
- carrying out the DSC measurement protocol comprising the steps of

1. Holding the mixture for 3 min at 15°C
2. Heating said mixture from 15°C to 120°C at 10°C/min

- using the standard DSC software to determine the Ref $T_{onset}$ from the onset of the peak indicating the thermal transition of starch gelatinisation in the DSC thermogram.

The equipment used for the DSC analysis can be any suitable calibrated DSC equipment and is preferably the Perkin Elmer Power Compensated DSC8000 equipped with an intracooler 3 as used herein. Preferably the DSC measurement is performed under nitrogen atmosphere with a gas flow of 20 mL/min.

In addition to the Ref $T_{onset}$ determined in the Ref DSC solution, the $T_{onset}$ may also be determined in the concentrate (Prod $T_{onset}$). The difference between the Ref $T_{onset}$ compared for a native and a modified annealed starch of the same botanical origin will be reflected in the Prod $T_{onset}$ of the same two starches in a given formulation.

Therefore, the Prod $T_{onset}$ is measured in a similar way as the Ref $T_{onset}$ using a Differential Scanning Calorimetry (DSC) comprising the steps of:

- making the gel concentrate into a paste (by stirring the gels with a spoon or spatula until a pasty texture is obtained)
- weighing 35-55 mg of concentrate in a DSC sample pan (60 $\mu$L high pressure stainless steel)
- carrying out the DSC measurement protocol comprising the steps of

1. Holding the mixture for 3 min at 15°C
2. Heating said mixture from 15°C to 120°C at 10°C/min

- using the standard DSC software to determine the Prod $T_{onset}$ from the onset of the peak indicating the thermal transition of starch gelatinisation in the DSC thermogram.

II Delayed swelling.

As mentioned above a delayed swelling starch can be determined using a Rapid Visco Analyser (RVA, Newport) with the standard RVA-software to establish a pasting curve as described below. During an RVA analysis, the starch is heated in an aqueous environment following a pre-defined temperature profile. The viscosity changes produced by heating and cooling starch in water generally provide a characteristic curve depending on the starch type and modification.
For the purpose of this invention, a starch is defined as a delayed swelling starch by analysing it using a Rapid Visco Analyser (RVA), whereby the RVA analysis comprises the steps of

i. Adding a suitable amount of starch to 25g of Ref-RVA Solution, said amount of starch adjusted to provide an increase of viscosity to 180-320cP at time= 7 min (Visc(7)) calculated from the base line viscosity Visc(BL) at time =1 min, whereby the Ref RVA-solution contains 1.3 wt% NaCl, 0.8 wt% sucrose and 97.9 wt% water;
ii. Carrying out the RVA test under "STD1" conditions as described below or similar;
iii. Determining the ViscRef defined as Visc (7) - Visc(BL) expressed in centiPoise (cP), whereby the ViscRef is between 180-320cP
iv. Determining T1 defined as the time necessary to first achieve ViscRef (starting t= 1min) and T2 defined as the time necessary to achieve half of the ViscRef (starting t= 1min)

Whereby the starch is defined as a delayed swelling starch if

a) T1 is preferably at least 6.5 min, more preferably at least 6.8 min, most preferably at least 7 min; and
b) T2 is preferably at least 4.6 min, more preferably at least 4.9 min, even more preferably at least 5 min, most preferably at least 5.1 min.

For the present invention the Ref RVA-solution is representative of a typical salt and sugar concentrations in the ready-to eat product.
The RVA standard analysis (STD1) test conditions (available in the standard equipment software package (Thermocline for Windows, TCW. Newport Scientific) can be described as:

| Time h:min:s | Type | Value |
| --- | --- | --- |
| 00:00:00 | Temperature | 50 °C |
| 00:00:00 | Speed | 960 rpm |
| 00:00:10 | Speed | 160 rpm |
| 00:01:00 | Temperature | 50 °C |
| 00:04:42 | Temperature | 95 °C |
| 00:07:12 | Temperature | 95 °C |
| 00:11:00 | Temperature | 50 °C |
| Profile End Time: 00:13:00 | | |
| Profile Idle Temp: 50 °C | | |

The amount of starch to be added to the Ref RVA-solution to achieve ViscRef can be easily adjusted by a person skilled in the art, for example by testing a range of amounts of starch added to the Ref RVA-Solution and obtaining ViscRef between 180-320 cP. The suitable amount of starch for the RVA analysis is preferably 0.8 to 2 g.
Typical ranges of the starch amounts to be tested are:

◦ Sago starch native and modified: 0.9-1.7 g
◦ Tapioca starch native and modified: 0.8-1.4 g
◦ Corn starch native and modified: 1.0-1.8 g

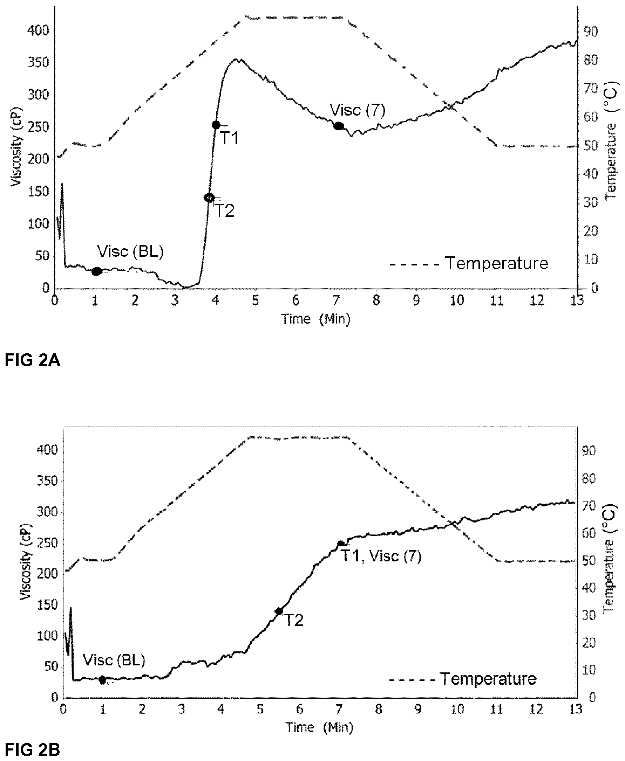

As an example pasting curves are shown in Figure 2 of a native sago starch without delayed swelling (Fig 2A) and a delayed swelling annealed sago starch (Fig 2B):

• Visc (BL)= viscosity at time = 1 min (in cP)

- Visc (7)= viscosity at time = 7 min (in cP)

T1 defined as the time necessary to first achieve ViscRef (starting t= 1min) and T2 defined as the time necessary to achieve half of the ViscRef (starting t= 1min)

The characteristic delayed swelling of the starch can also be measured in the concentrate. For this purpose, a suitable amount of the concentrate (e.g. 3-5g) should be added in 25g of water (diluted) in order to provide a suitable amount of starch (e.g. 0.8-2g) to provide an increase of viscosity of 180-320cP at time= 7 min calculated from the base line viscosity Visc(BL) at time =1 min. The amount of concentrate to be added to 25g of water will depend on the type of starch and amount of starch present in the concentrate and can be easily adjusted by a person skilled in the art, for example by testing a range of amounts of concentrate added to 25g of water. The characteristic delayed swelling of the starch in a food concentrate can be measured using a method comprising the following steps of:

> i. Adding a suitable amount of concentrate to 25g of water, said amount of concentrate adjusted to provide an increase of viscosity to 180-320cP at time= 7 min calculated from the base line viscosity Visc(BL) at time =1 min
> ii. Carrying out the RVA test under "STD1" conditions as described above or similar;
> iii. Determining the ViscRef defined as Visc(7) - Visc(BL) expressed in centiPoise (cP), whereby the ViscRef is between 180-320cP
> iv. Determining T1 defined as the time necessary to first achieve ViscRef (starting t= 1min) and T2 defined as the time necessary to achieve half of the ViscRef

(starting t= 1min)

Whereby the T1 and T2 are as defined *supra.*

Standardised wet lumping test

For the purpose of the present invention lumping of a concentrate according to the invention is preferably measured in the test below. The chosen test conditions favour the formation of lumps, i.e. adding the gelled concentrate in boiling water and with very mild stirring. This will allow to provide preferred food concentrates according to the invention which are more robust in use, even when consumers deviate from the instructions of use.

- A kitchen food preparation machine (Kenwood Cooking chef major KM070 series or similar), with temperature control with major sized Anchor Flexi beater stirrer attachment or similar.
- Stirrer moves at a stirring speed of ∼ 22 rotations per minute
- 25-30 g of gel food concentrate (cylindrical shape with 2 parallel surfaces, with height between 8-15 mm and diameter between 30-45 mm) is added to 250ml of water at 98°C in the Kenwood Mixer
- Stirring is continued for 1 min at 98 °C
- Stirring is stopped and product is maintained for 1 min at 98 °C. Product is sieved and amount undissolved material is weighed (1mm mesh sieve)

The concentrate according to the invention used in this lumping test is without particles of vegetable, meat or herbs or other solid ingredients with a size larger than the mesh (1mm) and that would remain in the sieve.

$$\text{Standardised wet lumping }(\%material\ undissolved) = \frac{weight\ material\ undissolved}{weight\ of\ initial\ concentrate}*100$$

It is understood that the % of material undissolved can be higher than 100% in cases in which the amount of material retained in the sieve is higher than the initial amount of concentrate (e.g. 25g concentrate is tested and the amount weighed in the sieve is 28 g). That is because the starch lumps also absorb water during cooking and that would be reflected in the amount retained in the sieve. The preferred non-gelatinised starch used in the invention shows a surprising decrease in lumping compared to the same concentrate with the same amount of native starch of the same botanical source.

Since the lumping test overestimates the lumping, it is expected that in real use including the addition of the concentrate to water at lower temperatures and/or e.g. intensive stirring with a hand whisk, as can be expected from some consumers, would lead to far lower absolute amount of lumps. However, a difference between preferred starches that are part of the invention and native starches of the same botanical source that are not part of the invention would still be observed.

Test Dissolution time

The dissolution time of the concentrate in absence of the non-gelatinised starch is measured by a conductivity measurement. The conductivity is measured according to the following method:

Equipment:

- Conductivity meter with data logging capacity
- Magnetic stirring (and magnetic stirrer) plate with heating function
- 1L glass beaker
- Temperature probe
- Meshed metal grid (4mm) with a support to suspend the grid inside the beaker

  - 500 ml of tap water is heated to boiling temperature and added to 1L glass beaker.
  - The beaker is placed on magnetic stirring plate with heating function. The temperature and conductivity probe are placed in the beaker.
  - A magnetic stirrer (smooth surface 64mm x 10mm) is placed at the bottom of the glass beaker.
  - Test conditions:

    a. The temperature of the heating plate is set so that the temperature can be maintained between 95-100°C throughout the test.
    b. The stirring is started and kept at 300rpm

  - Once the temperature reaches boiling (~98°C), the conductivity measurement is started.
  - 28 g (cylindrical shape with 2 parallel surfaces, with height between 8-15 mm and diameter between 30-45 mm) of a gel product in one single piece (shape stable*) is placed onto the meshed metal grid.
  - The metal grid which holds the gel is then gently immersed in the hot water until it is suspended 3 cm above the bottom of the glass beaker.
  - Stop the test when the value appears to stabilise on the conductivity meter
  - The 90% dissolution time is determined as the time at which 90% of the plateau value for the conductivity is reached (using conductivity curve)
  - Measurements are made in duplicate or triplicate (n = 2 or 3).

Preferably, the concentrate according to the invention has a dissolution time (measured without the non-gelatinised starch) of preferably at most 4 min, more preferably at most 3 min, even more preferably at most 2.8 min, and preferably more than 2 s, preferably more than 5 s, more preferably more than 10 s, even more preferably more than 20s.

Viscosity of the ready-to-eat product

It is desirable that the ready-to-eat product obtained after diluting the food concentrate according to the invention has a certain viscosity. The viscosity of ready-to-eat product is preferably measured as detailed below.

Dilute the concentrate in the required amount of warm water of 60 °C to obtain the ready-to-eat product (e.g. 28g concentrate in 250g water). Stir well and then heat the product for 1 min at 98°C, assuring that no water evaporates during the preparation. For the measurement of the viscosity of the ready-to-eat product the product is prepared under mild conditions so no lumps are present (i.e. recommended water temperature and suitable stirring). As some starches will take more time to reach full viscosity, the same experiment is repeated with stirring and heating for 5 respectively 10 minutes and the highest viscosity measured is noted.

The viscosity is measured in a Physica MCR rheometer 300, 301 (Anton Paar GmbH, Graz, Austria) or similar, with the following geometry:

- Measuring cup (ridged cylinder): Part number 21736
- Vane: Part number. 21888 ridged cylinder

Method:

1) Equilibration step: Shear rate at 30 s$^{-1}$ at 75°C for 2 min

2) Cooling step: Shear rate at 30 s$^{-1}$ from 75°C to 20°C at 2.04 °C/min

If necessary, a solvent trap should be used during the measurement to avoid water evaporation.

The viscosity at 60 °C on cooling is recorded as and expressed in mPa.s. (milli Pascal second).

## Examples

The invention is further exemplified in the examples below. The different starch samples are denoted as S1, S2 etc. The physically modified starch was supplied by Ingredion Inc (USA) (except for example 8). A savoury flavour mix was used to add savoury taste booster compounds to the concentrates. The amount of NaCl in the savoury flavour mix is in wt% by weight of the savoury flavour mix.

**Example 1.** A gravy concentrate with delayed-swelling physically modified non-gelatinised starch (annealed sago starch) showing reduced lumping.

|  | Gel with no starch (dissolution time) | Ex 1 |
|---|---|---|
| Ingredients(g) |  |  |
| Added water# | 39.7 | 39.7 |
| Non-gelatinised annealed sago starch (S2) | 0 | 28.6 |
| NaCl | 10.4 | 10.4 |
| Sugar | 7.6 | 7.6 |
| Savoury flavour mix* | 13.1 | 13.1 |
| Xanthan | 0.18 | 0.18 |
| Locust bean gum | 0.43 | 0.43 |
| Total | 71.4 | 100 |
|  |  |  |
| Appearance | gel | gel |
| Reduction in lumping vs the same composition with non-gelatinised native sago starch (S1) | n.a. | >50% |
| Viscosity of ready to eat food (at 60 °C) - 28g in 250ml, 5min cooking (in mPa.s) | n.a. | 146 |
| Dissolution time (composition minus the starch) | 2.5min | n.a. |
| * Savoury flavour mix contains: malt extract, yeast extract, onion, beef flavourings, paprika powder, onion flavouring, pepper, thyme, bay leaf. NaCl in the savoury flavour mix was about 9.6wt%. # total water content in in the concentrate of Ex 1: (added water + water of the other ingredients like starch) was about 42 wt% | | |

The food concentrate according to the invention with annealed sago starch (example 1) was in the form of a shape stable elastic gel. The ready-to-eat product obtained after dilution of 28g gravy concentrate in 250ml of hot water was a smooth gravy with excellent viscosity.

Starch characterization

Sago and annealed sago starch were analysed using RVA and DSC as described above. For the RVA analysis respectively 1.2g native sago and 1.2g of annealed sago starch were used.

| Starch | RVA | | | | DSC |
|---|---|---|---|---|---|
| | ViscRef | T1 | T2 | Delayed swelling | RefT$_{onset}$ |
| | (cP) | (min) | (min) | | (°C) |
| Native sago (S1)(Comp) | 210 | 3.9 | 3.8 | No | 77 |
| Annealed sago (S2) | 252 | 7.1 | 5.8 | Yes | 83 |

The increase of 6 °C in the Ref Tonset between native sago starch and annealed sago starch was also observed when the Prod Tonset was measured.

The delayed swelling character could also be confirmed after a RVA analysis of the food concentrate as described herein.

Process of preparing the concentrates

The gelled concentrates of example 1 were prepared with a Thermomix (Vorwerk, Germany) using the following steps:

- Add water to the vessel and heat to 50°C
- Admixing the gelling agents and allowing the gums to hydrate at 50°C
- Add the remaining (dry) ingredients (except starch) while mixing
- Activating the gelling agents by heating the mixture to 90°C
- Pasteurisation step: hold at 90°C for 2 min while mixing
- Cool to starch addition temperature (-58-60 °C)
- Admix the non-gelatinised starch for 2 min
- Filling containers with the mixture.
- Allowing the gel to set at 20°C (for at least 24h before carrying out any measurements)

Speed was adjusted throughout the process between setting 2-4 to allow for optimum stirring and low air incorporation.

This process was also used to prepare the food concentrates in the next examples, except when otherwise stated.

Example 2 A food concentrate with delayed-swelling physically modified non-gelatinised starch (annealed corn starch) showing reduced lumping

| Ingredients (g) | |
|---|---|
| Added water # | 39.7 |
| Non-gelatinised annealed corn starch(S4) | 28.6 |
| NaCl | 10.4 |
| Sucrose | 7.6 |
| Savoury flavour mix * | 13.1 |
| Xanthan | 0.18 |
| Locust bean gum | 0.43 |
| Total | 100.0 |
| | |
| Appearance | gel |
| Reduction in lumping vs the same composition with non-gelatinised native corn starch (S3) | >20% |

(continued)

| Ingredients (g) | |
|---|---|
| Viscosity of ready to eat food (at 60 °C) - 28g in 250ml, 5min cooking (in mPa.s) | 62 |
| * Savoury flavour mix contains*: malt extract, yeast extract, onion, beef flavourings, paprika powder, onion flavouring, pepper, thyme, bay leaf. NaCl in the savoury flavour mix was about 9.6 wt%. <br> # total water content (added water + water of the other ingredients like starch) in the concentrate was about 42 wt% | |

The ready-to-eat product obtained after dilution of 28g concentrate in 250ml of water was smooth with excellent viscosity. The dissolution time of the concentrate in absence of the starch was 2.5 min.

Starch characterization

Native Corn and annealed corn starch were analysed using RVA and DSC as described above. For the RVA analysis respectively 1.2g native corn and 1.4g of annealed corn were used.

| | RVA | | | | DSC |
|---|---|---|---|---|---|
| Starch | ViscRef | T1 | T2 | Delayed swelling | $RefT_{onset}$ |
| | (cP) | (min) | (min) | | (°C) |
| Native corn (Comp) (S3) | 237 | 5.4 | 4.9 | No | 75 |
| Annealed corn (S4) | 241 | 6.8 | 5.0 | Yes | 79 |

**Example 3** Lumping for a concentrate using a delayed-swelling physically modified starch according to the invention compared to lumping in concentrates with nondelayed swelling starches (comparative)

| | 3A (Comp) | 3B(Comp) | 3C |
|---|---|---|---|
| Ingredients (wt%) | Native potato (S5) | Annealed tapioca (S6) | Annealed sago (S7) |
| Added water# | 41.0 | 41.0 | 41.0 |
| Non-gelatinised starch | 25.0 | 25.0 | 25.0 |
| NaCl | 10.5 | 10.5 | 10.5 |
| Sucrose | 8.0 | 8.0 | 8.0 |
| Savoury flavour mix | 14.8 | 14.8 | 14.8 |
| Xanthan | 0.35 | 0.35 | 0.35 |
| Locust bean gum | 0.35 | 0.35 | 0.35 |
| Total | 100 | 100 | 100 |
| | | | |
| Appearance | Failed to form a gel | gel | gel |
| Standardised wet lumping test (%undissolved) | Not applicable | 133 | 67 |
| * Savoury flavour mix contains: malt extract, yeast extract, onion, beef flavourings, paprika powder, onion flavouring, pepper, thyme, bay leaf. NaCl in the savoury flavour mix was about 18.3 wt%. <br> # total water content in the concentrate (added water + water of the other ingredients like starch) was about 44.6wt% | | | |

Starch characterization

Native Corn and annealed corn starch were analysed using RVA and DSC as described above. For the RVA analysis respectively 0.8g of native potato, 1g of annealed tapioca starch and 1g of annealed sago starch were used.

| Starch | RVA | | | | DSC |
|---|---|---|---|---|---|
| | ViscRef | T1 | T2 | Delayed swelling | RefT$_{onset}$ |
| | (cP) | (min) | (min) | | (°C) |
| Native potato (S5) (Comp) | 206 | 6.7 | 4.9 | Yes | 61 |
| Annealed tapioca (S6) (Comp) | 225 | 5.3 | 4.4 | No | 83 |
| Annealed sago (S7) | 218 | 7.0 | 5.5 | Yes | 83 |

From the results of the starch analysis above it is clear that only annealed sago starch is both a delayed swelling physically modified starch and has a RefT$_{onset}$ of at least 74°C. The concentrate with annealed sago starch showed the least amount of lumping using the test described above.

**Example 4** Concentrates according to the invention showing good reduction in lumping whereby the ready-to-eat product shows excellent viscosity at different levels of annealed sago starch. Ratio XLBG 1:1

| | Ex.4A | Ex.4B | Ex.4C |
|---|---|---|---|
| Ingredients (g) | | | |
| Added water # | 37.2 | 37.2 | 37.2 |
| Non-gelatinised annealed sago starch (S9) | 25.0 | 23.0 | 20.0 |
| NaCl | 9.8 | 9.8 | 9.8 |
| Sucrose | 7.1 | 7.1 | 7.1 |
| Beef extract Paste 65% DS | 3.9 | 3.9 | 3.9 |
| Beef Fat | 3.8 | 3.8 | 3.8 |
| Savoury flavour mix* | 12.4 | 12.4 | 12.4 |
| Xanthan gum | 0.32 | 0.32 | 0.32 |
| Locust bean gum | 0.32 | 0.32 | 0.32 |
| High acyl gellan | 0.14 | 0.14 | 0.14 |
| Total | 100.0 | 98.0 | 95.0 |
| | | | |
| Appearance | gel | gel | gel |
| Reduction in lumping vs the same composition with non-gelatinised native sago starch (S8) | >40% | (>50%) | (>50%) |
| Viscosity of ready-to-eat product (at 60 °C) - 28g in 250ml, 1min cooking (in mPa.s) | 158 | 132 | 81 |
| * Savoury flavour mix contains: malt extract, yeast extract, onion, beef flavourings, paprika powder, onion flavouring, pepper, thyme, bay leaf. NaCl in the savoury flavour mix was about 17wt%. # total water content in the concentrate (added water + water of the other ingredients like starch) was between 41-42 wt% | | | |

This example shows the reduction in lumping using one of the more preferred starches according to the invention i.e. annealed sago starch. The reduction in lumping for examples 4B and 4C are placed between brackets as these are calculated vs a comparative example with native sago (S8) that contains 25g starch. However, the numbers help to illustrate that -surprisingly - it is possible to decrease the amount of non-gelatinised start and lumping while maintaining a good viscosity in the ready-to-eat product.

Starch characterization

Sago and annealed sago starch were analysed using RVA and DSC as described above. For the RVA analysis respectively 1.2 g native sago and 1g of annealed sago starch were used.

| | RVA | | | | DSC |
|---|---|---|---|---|---|
| Starch | ViscRef | T1 | T2 | Delayed swelling | RefT$_{onset}$ |
| | (cP) | (min) | (min) | | (°C) |
| Native sago (S8) (Comp) | 229 | 3.9 | 3.8 | no | 75 |
| Annealed sago (S9) | 302 | 7.0 | 5.1 | yes | 80 |

**Example 5** Decreased lumping at different ratios of xanthan and LBG

| | 5A | 5B |
|---|---|---|
| Ingredient | wt% | wt% |
| Added water# | 37.2 | 37.2 |
| Non-gelatinised annealed sago starch (S9) | 25.0 | 25.0 |
| NaCl | 9.8 | 9.8 |
| Sucrose | 7.1 | 7.1 |
| Beef extract Paste 65% DS | 3.9 | 3.9 |
| Beef Fat | 3.8 | 3.8 |
| Savoury flavour mix* | 12.4 | 12.4 |
| Xanthan gum | 0.32 | 0.19 |
| Locust bean gum | 0.32 | 0.45 |
| High acyl gellan | 0.14 | 0.14 |
| Total | 100.0 | 100.0 |
| | | |
| Appearance | gel | gel |

*Savoury flavour mix contains: malt extract, yeast extract, onion, beef flavourings, paprika powder, onion flavouring, pepper, thyme, bay leaf. NaCl in the savoury flavour mix was about 17 wt%.
# total water content in the concentrate (added water + water of the other ingredients like starch) was about 42 wt%

Both examples 5A and 5B showed excellent reduction in lumping.

**Example 6** Concentrate according to the invention based on Xanthan-Konjac with a preferred delayed-swelling physically modified starch of example 1.

| Ingredient | wt% |
|---|---|
| Added water # | 41.3 |
| Non-gelatinised annealed sago starch (S2) | 31.7 |
| NaCl | 10.8 |

(continued)

| Ingredient | wt% |
|---|---|
| Sucrose | 2.0 |
| Savoury flavour mix * | 13.8 |
| Konjac flour | 0.28 |
| Xanthan gum | 0.12 |
| Total | 100.0 |
| | |
| Appearance | gel |
| * Savoury flavour mix: Beef flavourings, yeast extract. NaCl in the savoury flavour mixwas about 18.7 wt% . | |

The concentrate according to example 6 showed very low lumping.

**Example 7** Reduction in lumping when diluted by a consumer

| Ingredient | wt% |
|---|---|
| Added water # | 37.2 |
| Non-gelatinised annealed corn starch(S4) | 25.0 |
| NaCl | 9.8 |
| Sucrose | 7.1 |
| Beef extract Paste (65% DS) | 3.9 |
| Beef Fat | 3.8 |
| Flavour mix* | 12.4 |
| Xanthan gum | 0.32 |
| Locust bean gum | 0.32 |
| High Acyl gellan | 0.14 |
| | 100.0 |
| | |
| Reduction in lumping vs comp after preparation by user 1 (hand whisking) | >65% |
| Reduction in lumping vs comp after preparation by user 2 (hand whisking) | >65% |
| *Flavour mix: malt extract, yeast extract, onion, beef flavourings, paprika powder, onion flavouring, pepper, thyme, bay leaf. NaCl in the flavour mix was about 17wt% (w/w). | |

Two individual consumers (user 1 and user 2), each prepared a ready-to-eat product from the concentrate in ex. 7 in the following manner: 28g of the concentrate was added to 250ml of boiling water and stirred with a hand whisk for 1 min. Then the product was allowed to boil without stirring for 1 min. The ready-to-eat product was sieved and the amount of undissolved material was weighed (1mm mesh sieve) using the set up described above.
The lumping was calculated as:

$$Lumping\ after\ gravy\ preparation\ (hand\ whisking)\ \%material\ undissolved =$$

$$\frac{weight\ material\ undissolved}{weight\ of\ initial\ product}*100$$

A lumping reduction of more than 65% was observed by both consumers when using a starch that fulfils the selection criteria (annealed corn S4) when compared to a control experiment wherein the consumers used the same concentrate with the native corn starch (S3).

**Example 8**: Gravy concentrate containing non-gelatinised annealed sago starch

| Ingredient | wt% |
|---|---|
| Added water # | 37.1 |
| Annealed sago starch (S10) | 25.0 |
| NaCl | 9.7 |
| Sucrose | 7.3 |
| Beef extract Paste 65% DS | 3.9 |
| Beef Fat | 3.9 |
| Savoury flavour mix* | 12.5 |
| Xanthan Gum | 0.32 |
| LBG | 0.32 |
| Total | 100.0 |
| | |
| Appearance | Gel |
| Viscosity of ready-to-eat product (at 60 °C) - 28g in 250ml, 1min cooking (in mPa.s) | 65 |
| Savoury flavour mix*: malt extract, yeast extract, onion, beef flavourings, paprika powder, onion flavouring, pepper, thyme, bay leaf. NaCl in Savoury flavour mix was about 17% wt. | |

Starch characterization

Annealed sago starch was analysed using RVA and DSC as described above. For the RVA analysis respectively 1.1g annealed sago starch was used.

| | RVA | | | | DSC |
|---|---|---|---|---|---|
| | ViscRef | T1 | T2 | Delayed swelling | $RefT_{onset}$ |
| | (cP) | (min) | (min) | | (°C) |
| Annealed sago (S10) | 235 | 6.9 | 5.1 | Yes | 81 °C |

The gravy concentrate of example 8 showed low lumping upon dilution and the ready-to-eat product had a good viscosity.

**Example 9**

A delayed swelling physically modified starch according to the invention was prepared with the following process.

- A water slurry of non-gelatinised native sago starch (excess water, e.g. 4-5% wt starch) was heated to a temperature of 64°C and kept (incubated) to this temperature for about 2h or about 3h. This step can be performed under mild stirring.
- The excess water was removed (e.g. by sedimentation and filtering) and the starch was dried at temperature and conditions to remain non-gelatinized. (e.g. vacuum dried, T< 60°C)

The result was a delayed swelling physically modified starch with a RefTonset of higher than 79°C.

**Example 10:** A gravy concentrate with delayed-swelling physically modified non-gelatinised starch: Heat moisture treated potato starch [Comparative]

A comparative experiment was carried out by preparing a gravy concentrate with heat moisture treated potato starch with the following composition

|  | Ex 10 (comp) |
|---|---|
| Ingredients(g) |  |
| Added water# | 39.8 |
| Non-gelatinised Heat moisture treated potato starch | 28.7 |
| NaCl | 10.4 |
| Sugar | 7.6 |
| Savoury flavour mix* | 13.2 |
| Xanthan | 0.2 |
| Locust bean gum | 0.4 |
| Total | 100 |
| * Savoury flavour mix contains: malt extract, yeast extract, onion powder, paprika powder, flavourings, pepper, thyme, bay leaf. NaCl in the savoury flavour mix was about 9.6wt%. <br> # total water content in Ex 10: (added water + water of the other ingredients like starch) was about 42 wt% | |

Preparation was as described in Example 1, whereby temperature of starch addition was adjusted for the Heat moisture treated potato starch to 50-52 °C. Speed was adjusted throughout the process between setting 2- 5 to allow for optimum stirring and low air incorporation.

Starch characterization

Heat moisture treated potato starch was analysed using RVA and DSC as described above. For the RVA 1. 2g of heat moisture treated potato starch was used.

|  | RVA | | | | DSC |
|---|---|---|---|---|---|
| Starch | ViscRef | T1 | T2 | Delayed swelling | RefT$_{onset}$ |
|  | (cP) | (min) | (min) |  | (°C) |
| Heat moisture treated potato starch | 283 | 7.1 | 6.1 | Yes | 63 |

The resulting product was a paste without the characteristic brittleness and elasticity of a gel. In the standardized wet lumping test, the comparative example with heat moisture treated potato starch showed less lumping that native sago but more than a starch according to the invention (annealed sago starch).

**Example 11 [comparative] sorbitol and non-gelatinised starch**

Example 1 of WO 2004/049822 discloses a liquid fluid thickener composition with 32% non-gelatinised starch and 43.4% sorbitol as shown below. As sorbitol is not acceptable for many consumers, an attempt was made to produce a thickener according to example 1 of WO 2004/049822 but without sorbitol.

|  | **Example 1 in** WO 2004/049822 |
|---|---|
|  | (g) |
| Sorbitol | 43.4 |

(continued)

|  | **Example 1 in** WO 2004/049822 |
| --- | --- |
|  | (g) |
| Native potato starch | 32.0 |
| Water | 17.9 |
| Kitchen salt | 3.0 |
| Potassium acetate | 3.6 |
| Xanthan | 0.1 |
|  |  |
| TOTAL | 100 |

Without sorbitol the product could not be processed as the mixing equipment was blocked by the addition of the non-gelatinised starch.

**Claims**

1. A food concentrate in the form of a gel comprising

   a) 35 to 70 wt% of water by weight of the total food concentrate;
   b) 15 to 40 wt% of salt by weight of the total water content of the food concentrate;
   c) an effective amount of a taste booster selected from glutamate, 5'-ribonucleotides, sucrose, glucose, fructose, lactic acid, citric acid and mixtures thereof;
   d) 10 to 40 wt% by weight of the total food concentrate of a delayed-swelling physically modified non-gelatinised starch **characterised by** Ref $T_{onset}$ of at least 74°C;
   e) an effective amount of the combination of xanthan with at least one galactomannan and/or glucomannan to obtain a gel.

2. A food concentrate according to claim 1 wherein the non-gelatinised starch is annealed starch, optionally annealed starch modified by an additional heat-moisture treatment.

3. A food concentrate according to any one of the preceding claims wherein the concentrate comprises less than 5 wt%, preferably less than 3 wt%, more preferably less than 1 wt%, more preferably less than 0.1 wt%, most preferably 0% of a sorbitol by weight of the total food concentrate.

4. A food concentrate according to any one of the preceding claims wherein the non-gelatinised starch is annealed sago starch and/or annealed corn starch.

5. A food concentrate according to any one of the preceding claims wherein the weight:weight ratio of xanthan to galactomannan and/or glucomannan is from 10 : 90 to 90 : 10, more preferably 10 : 90 to 50 : 50.

6. A food concentrate according to any one of the preceding claims wherein the food concentrate has a firmness of above 20g, preferably above 30g, more preferably above 50g, preferably less than 1000g, more preferably less than 500g most preferably less than 350g.

7. A food concentrate according to any one of the preceding claims wherein the food concentrate shows a reduction in lumping in the test described herein of at least 15%, more preferably at least 20%, more preferably at least 30%, more preferably at least 40%, more preferably at least 50% and preferably at most 100% when compared to the same concentrate except that the starch according to invention is replaced by the native starch from the same botanical source.

8. A food concentrate according to any one of the preceding claims wherein the food concentrate provides a ready-to-eat product having viscosity of at least 10 mPa.s, preferably at least 20 mPa.s, more preferably at least 30 mPa.s,

most preferably at least 50 mPa.s at 60°C, wherein preferably said ready-to eat product is a soup, sauce or gravy.

9. A food concentrate according to any one of the preceding claims comprising less than 5 wt%, preferably less than 3 wt%, more preferably less than 1 wt% of a liquid polyol by weight of the total food concentrate.

10. A food concentrate according to any one of the preceding claims having a dissolution time (measured without the non-gelatinised starch) of at most 4 min, more preferably at most 3 min, even more preferably at most 2.8 min.

11. A food concentrate according to claim 1 comprising

   a) 35 to 70 wt% of water by weight of the total food concentrate;
   b) 15 to 40 wt% of salt by weight of the total water content of the food concentrate;
   c) 1 to 40 wt% by weight of the total food concentrate of a taste booster selected from glutamate, 5'-ribonucleotides, sucrose, glucose, fructose, lactic acid, citric acid and mixtures thereof;
   d) 10 to 40 wt% by weight of the total food concentrate of a delayed-swelling non-gelatinised annealed starch **characterised by** Ref $T_{onset}$ of at least 74°C;
   wherein the non-gelatinised starch is annealed sago starch and/or annealed corn starch;
   e) 0.2 to 5 wt% by weight of the total water content of the food concentrate of the combination of xanthan and locust bean gum to obtain a gel;
   f) less than 5 wt% of liquid polyol by weight of the total food concentrate;
   g) less than 5 wt% of sorbitol by weight of the total food concentrate;

   wherein the weight:weight ratio of xanthan to locust bean gum is from 10 : 90 to 50 : 50; and
   wherein the food concentrate has a firmness of above 30g, more preferably above 50g and less than 500g most preferably less than 350g;
   wherein the food concentrate provides a ready-to-eat product having viscosity of at least 10 mPa.s, preferably at least 20 mPa.s, more preferably at least 30 mPa.s , most preferably at least 50 mPa.s at 60°C, wherein said ready-to-eat product is a a soup, sauce or gravy.

12. A process for preparing a food concentrate according to any one of the preceding claims, said process comprising the steps of:

   i) preparing a mixture comprising:

      - water,
      - the combination of xanthan with galactomannan and/or glucomannan,

   ii) heating said mixture, preferably to higher than 75 °C;
   iii) admixing the non-gelatinised starch to the mixture at a temperature which is lower than the Tonset of the non-gelatinised starch, preferably of less than 74°C,
   whereby salt, taste booster and any optional ingredient may be admixed at anyone of steps i) to iii);
   optionally, filling the mixture of step iii) into a packaging; and
   iv) allowing the mixture to form a food concentrate in the form of a gel.

13. A process according to claim 11 wherein the non-gelatinised starch is admixed at a temperature of less than 72 °C, more preferably less than 70 °C most preferably less than 68 °C, preferably above 53 °C, more preferably above 55 °C.

14. Use of a food concentrate according to any one of the preceding claims 1 to 11 to prepare a soup, a sauce or a gravy.

15. A process to provide a ready-to-eat food product, comprising the steps of:

   • a) providing a food concentrate according to any one of the preceding claims 1 to 10,
   • b) admixing at least part of the food concentrate to an aqueous phase to dilute it, preferably at a 20g/L to 350g/L,
   • c) heating the mixture resulting from step b) to a temperature higher than the Ref $T_{onset}$ of the starch used, such as to achieve a viscosity increase of the mixture to result in a ready-to-eat food product, whereby the dilution in step b) t is preferably between 20g/L and 350g/L and more preferably between 50 and 250g/L.

**Patentansprüche**

1. Lebensmittelkonzentrat in Form eines Gels, umfassend

   a) 35 bis 70 Gew.-% Wasser, bezogen auf das Gewicht des gesamten Lebensmittel konzentrats;
   b) 15 bis 40 Gew.-% Salz, bezogen auf das Gewicht des gesamten Wassergehalts des Lebensmittelkonzentrats;
   c) eine wirksame Menge eines Geschmacksverstärkers, der unter Glutamat, 5'-Ribonucleotiden, Sucrose, Glucose, Fructose, Milchsäure, Citronensäure und Mischungen davon ausgewählt ist;
   d) 10 bis 40 Gew.-% einer verzögert quellenden, physikalisch modifizierten, nicht-gelatinierten Stärke, bezogen auf das Gewicht des gesamten Lebensmittelkonzentrats, die durch Ref $T_{onset}$ von mindestens 74°C gekennzeichnet ist;
   e) eine wirksame Menge der Kombination von Xanthan mit mindestens einem Galactomannan und/oder Glucomannan, um ein Gel zu erhalten.

2. Lebensmittelkonzentrat nach Anspruch 1, wobei die nicht-gelatinierte Stärke eine getemperte Stärke, optional eine getemperte Stärke, modifiziert durch eine zusätzliche Wärme-Feuchtigkeits-Behandlung, ist.

3. Lebensmittelkonzentrat nach irgendeinem der vorhergehenden Ansprüche, wobei das Konzentrat weniger als 5 Gew.-%, vorzugsweise weniger als 3 Gew.-%, bevorzugter weniger als 1 Gew.-%, bevorzugter weniger als 0,1 Gew.-%, höchst bevorzugt 0% eines Sorbits, bezogen auf das Gewicht des gesamten Lebensmittelkonzentrats, umfasst.

4. Lebensmittelkonzentrat nach irgendeinem der vorhergehenden Ansprüche, wobei die nicht-gelatinierte Stärke getemperte Sagostärke und/oder getemperte Maisstärke ist.

5. Lebensmittelkonzentrat nach irgendeinem der vorhergehenden Ansprüche, wobei das Verhältnis Gewicht:Gewicht von Xanthan zu Galactomannan und/oder Glucomannan von 10:90 bis 90:10, bevorzugter 10:90 bis 50:50, beträgt.

6. Lebensmittelkonzentrat nach irgendeinem der vorhergehenden Ansprüche, wobei das Lebensmittelkonzentrat eine Festigkeit über 20 g, vorzugsweise über 30 g, bevorzugter über 50 g, bevorzugt weniger als 1000 g, bevorzugter weniger als 500 g, höchst bevorzugt weniger als 350 g, aufweist.

7. Lebensmittelkonzentrat nach irgendeinem der vorhergehenden Ansprüche, wobei das Lebensmittelkonzentrat eine Verringerung der Klumpenbildung in dem hier beschriebenen Test von mindestens 15%, bevorzugter mindestens 20%, bevorzugter mindestens 30%, bevorzugter mindestens 40%, bevorzugter mindestens 50% und bevorzugt höchstens 100%, zeigt, wenn mit dem gleichen Konzentrat verglichen wird, außer dass die Stärke gemäß der Erfindung durch die native Stärke aus der gleichen botanischen Quelle ersetzt ist.

8. Lebensmittelkonzentrat nach irgendeinem der vorhergehenden Ansprüche, wobei das Lebensmittelkonzentrat ein verzehrfertiges Produkt einer Viskosität von mindestens 10 mPa.s, vorzugsweise mindestens 20 mPa.s, bevorzugter mindestens 30 mPa.s, höchst bevorzugt mindestens 50 mPa.s bei 60°C liefert, wobei das verzehrfertige Produkt vorzugsweise eine Suppe, Soße oder eine Bratensoße ist.

9. Lebensmittelkonzentrat nach irgendeinem der vorhergehenden Ansprüche, umfassend weniger als 5 Gew.-%, vorzugsweise weniger als 3 Gew.-%, bevorzugter weniger als 1 Gew.-% eines flüssigen Polyols, bezogen auf das Gewicht des gesamten Lebensmittelkonzentrats.

10. Lebensmittelkonzentrat nach irgendeinem der vorhergehenden Ansprüche, das eine Auflösungszeit (gemessen ohne die nicht-gelatinierte Stärke) von höchstens 4 min, bevorzugter höchstens 3 min, sogar bevorzugter höchstens 2,8 min, aufweist.

11. Lebensmittelkonzentrat nach Anspruch 1, umfassend

   a) 35 bis 70 Gew.-% Wasser, bezogen auf das Gewicht des gesamten Lebensmittelkonzentrats;
   b) 15 bis 40 Gew.-% Salz, bezogen auf das Gewicht des gesamten Wassergehalts des Lebensmittelkonzentrats;
   c) 1 bis 40 Gew.-% an einem Geschmacksverstärker, bezogen auf das Gewicht des gesamten Lebensmittelkonzentrats, der unter Glutamat, 5'-Ribonucleotiden, Sucrose, Glucose, Fructose, Milchsäure, Citronensäure und Mischungen davon ausgewählt ist;

d) 10 bis 40 Gew.-% einer verzögert quellenden, nicht-gelatinierten, getemperten Stärke, bezogen auf das Gewicht des gesamten Lebensmittelkonzentrats, die durch eine Ref $T_{onset}$ von mindestens 74°C gekennzeichnet ist;

wobei die nicht-gelatinierte Stärke getemperte Sagostärke und/oder getemperte Maisstärke ist;

e) 0,2 bis 5 Gew.-% der Kombination von Xanthan oder Johannesbrotgummi, bezogen auf das Gewicht des gesamten Wassergehalts des Lebensmittelkonzentrats, um ein Gel zu erhalten;

f) weniger als 5 Gew.-% flüssiges Polyol, bezogen auf das Gewicht des gesamten Lebensmittelkonzentrats;

g) weniger als 5 Gew.-% Sorbit, bezogen auf das Gewicht des gesamten Lebensmittelkonzentrats;

wobei das Verhältnis Gewicht:Gewicht von Xanthan zu Johannesbrotgummi von 10:90 bis 50:50 beträgt; und wobei das Lebensmittelkonzentrat eine Festigkeit über 30 g, bevorzugter über 50 g und weniger als 500 g, höchst bevorzugt weniger als 350 g, aufweist; wobei das Lebensmittelkonzentrat ein verzehrfähiges Produkt einer Viskosität von mindestens 10 mPa.s, vorzugsweise mindestens 20 mPa.s, bevorzugter mindestens 30 mPa.s, höchst bevorzugt mindestens 50 mPa.s bei 60°C liefert, wobei das verzehrfähige Produkt eine Suppe, Soße oder eine Bratensoße ist.

12. Verfahren zur Herstellung eines Lebensmittelkonzentrats nach irgendeinem der vorhergehenden Ansprüche, wobei das Verfahren die Schritte umfasst:

i) Herstellen einer Mischung, umfassend:

- Wasser,
- die Kombination von Xanthan mit Galactomannan und/oder Glucomannan,

ii) Erhitzen der Mischung, vorzugsweise auf höher als 75°C;

iii) Zumischen der nicht-gelatinierten Stärke zu der Mischung bei einer Temperatur, die niedriger als die $T_{onset}$ der nicht-gelatinierten Stärke, vorzugsweise weniger als 74°C, ist, wobei Salz, Geschmacksverstärker und jegliche optionale Zutat in irgendeinem der Schritte i) bis iii) zugemischt werden können;

optional Füllen der Mischung vom Schritt iii) in eine Verpackung; und

iv) es der Mischung ermöglichen, ein Lebensmittelkonzentrat in Form eines Gels zu bilden.

13. Verfahren nach Anspruch 11, wobei die nicht-gelatinierte Stärke bei einer Temperatur von weniger als 72°C, bevorzugter von weniger als 70°C, höchst bevorzugt von weniger als 68°C, vorzugsweise über 53°C, bevorzugter über 55°C, zugemischt wird.

14. Verwendung eines Lebensmittelkonzentrats nach irgendeinem der vorhergehenden Ansprüche 1 bis 11, um eine Suppe, eine Soße oder eine Bratensoße herzustellen.

15. Verfahren zum Bereitstellen eines verzehrfähigen Lebensmittelprodukts, umfassend die Schritte:

• a) Bereitstellen eines Lebensmittelkonzentrats nach irgendeinem der vorhergehenden Ansprüche 1 bis 10,
• b) Zumischen mindestens eines Teils des Lebensmittelkonzentrats zu einer wässrigen Phase, um diese zu verdünnen, vorzugsweise auf 20 g/l bis 350 g/l,
• c) Erhitzen der Mischung, die aus Schritt b) resultiert, auf eine Temperatur von mehr als die Ref $T_{onset}$ der verwendeten Stärke, so dass ein Viskositätsanstieg der Mischung erzielt wird, um ein verzehrfertiges Produkt zu ergeben, wobei die Verdünnung im Schritt b) vorzugsweise zwischen 20 g/l und 350 g/l und bevorzugter zwischen 50 und 250 g/l liegt.

**Revendications**

1. Concentré alimentaire dans la forme d'un gel comprenant

a) de 35 à 70 % en masse d'eau en masse du concentré alimentaire total ;
b) de 15 à 40 % en masse de sel en masse de la teneur totale en eau du concentré alimentaire ;
c) une quantité efficace d'un exhausteur de goût choisi parmi un glutamate, des 5'-ribonucléotides, du saccharose, glucose, fructose, acide lactique, acide citrique et mélanges de ceux-ci ;
d) de 10 à 40 % en masse du concentré alimentaire total d'un amidon non-gélatinisé physiquement modifié à gonflement retardé **caractérisé par** $T_{début}$ Ref d'au moins 74°C ;

e) une quantité efficace de la combinaison de xanthane avec au moins un galactomannane et/ou glucomannane pour obtenir un gel.

2. Concentré alimentaire selon la revendication 1, dans lequel l'amidon non-gélatinisé est de l'amidon recuit, de l'amidon éventuellement recuit modifié par un traitement à la chaleur-humidité supplémentaire.

3. Concentré alimentaire selon l'une quelconque des revendications précédentes, dans lequel le concentré comprend moins de 5 % en masse, de préférence moins de 3 % en masse, encore mieux moins de 1 % en masse, bien mieux encore moins de 0,1 % en masse, particulièrement de préférence 0 % d'un sorbitol en masse du concentré alimentaire total.

4. Concentré alimentaire selon l'une quelconque des revendications précédentes, dans lequel l'amidon non-gélatinisé est de l'amidon de sago recuit et/ou de l'amidon de maïs recuit.

5. Concentré alimentaire selon l'une quelconque des revendications précédentes, dans lequel le rapport masse : masse de xanthane à galactomannane et/ou glucomannane est de 10 : 90 à 90 : 10, encore mieux de 10 : 90 à 50 : 50.

6. Concentré alimentaire selon l'une quelconque des revendications précédentes, dans lequel le concentré alimentaire a une consistance supérieure à 20 g, de préférence supérieure à 30 g, encore mieux supérieure à 50 g, de préférence inférieure à 1 000 g, encore mieux inférieure à 500 g, bien mieux encore inférieure à 350 g.

7. Concentré alimentaire selon l'une quelconque des revendications précédentes, dans lequel le concentré alimentaire présente une réduction de formation de morceaux dans le test décrit ici d'au moins 15 %, encore mieux d'au moins 20 %, bien mieux encore d'au moins 30 %, particulièrement de préférence d'au moins 40 %, encore mieux de préférence d'au moins 50 % et bien mieux encore de préférence d'au plus 100 % lorsqu'il est comparé au même concentré à l'exception que l'amidon selon l'invention est remplacé par de l'amidon natif de la même source botanique.

8. Concentré alimentaire selon l'une quelconque des revendications précédentes, dans lequel le concentré alimentaire fournit un produit prêt à être consommé ayant une viscosité d'au moins 10 mPa.s, de préférence d'au moins 20 mPa.s, encore mieux d'au moins 30 mPa.s, bien mieux encore d'au moins 50 mPa.s à 60°C, dans lequel de préférence ledit produit prêt à être consommé est une soupe, une sauce ou un jus de viande.

9. Concentré alimentaire selon l'une quelconque des revendications précédentes, comprenant moins de 5 % en masse, de préférence moins de 3 % en masse, encore mieux moins de 1 % en masse d'un polyol liquide en masse du concentré alimentaire total.

10. Concentré alimentaire selon l'une quelconque des revendications précédentes, présentant une durée de dissolution (mesurée sans l'amidon non-gélatinisé) d'au plus 4 min, encore mieux d'au plus 3 min, bien mieux encore d'au plus 2,8 min.

11. Concentré alimentaire selon la revendication 1 comprenant

a) de 35 à 70 % en masse d'eau en masse du concentré alimentaire total ;
b) de 15 à 40 % en masse de sel en masse de la teneur totale en eau du concentré alimentaire ;
c) de 1 à 40 % en masse en masse du concentré alimentaire total d'un exhausteur de goût choisi parmi un glutamate, des 5'-ribonucléotides, du saccharose, glucose, fructose, acide lactique, acide citrique et mélanges de ceux-ci ;
d) de 10 à 40 % en masse du concentré alimentaire total d'un amidon recuit non-gélatinisé à gonflement retardé **caractérisé par** $T_{début}$ Ref d'au moins 74°C ;
dans lequel l'amidon non-gélatinisé est de l'amidon de sago recuit et/ou de l'amidon de maïs recuit ;
e) de 0,2 à 5 % en masse de la teneur totale en eau du concentré alimentaire de la combinaison de xanthane et de gomme de caroube pour obtenir un gel ;
f) moins de 5 % en masse de polyol liquide en masse du concentré alimentaire total ;
g) moins de 5 % en masse de sorbitol en masse du concentré alimentaire total ;

dans lequel le rapport masse : masse de xanthane à gomme de caroube est de 10 : 90 à 50 : 50 ; et
dans lequel le concentré alimentaire présente une consistance supérieure à 30 g, encore mieux supérieure à 50 g et inférieure à 500 g bien mieux encore inférieure à 350 g ;

dans lequel le concentré alimentaire fournit un produit prêt à être consommé ayant une viscosité d'au moins 10 mPa.s, de préférence d'au moins 20 mPa.s, encore mieux d'au moins 30 mPa.s, bien mieux encore d'au moins 50 mPa.s à 60°C, dans lequel ledit produit prêt à être consommé est une soupe, une sauce ou un jus de viande.

12. Procédé pour la préparation d'un concentré alimentaire selon l'une quelconque des revendications précédentes, ledit procédé comprenant les étapes de :

i) préparation d'un mélange comprenant :

- de l'eau,
- la combinaison de xanthane avec du galactomannane et/ou glucomannane,

ii) chauffage dudit mélange, de préférence à plus de 75°C ;

iii) mélange de l'amidon non-gélatinisé au mélange à une température qui est inférieure à la $T_{début}$ de l'amidon non-gélatinisé, de préférence inférieure à 74°C, sur quoi du sel, un exhausteur de goût et tout ingrédient éventuel peuvent être mélangés dans l'une quelconque des étapes i) à iii) ;

éventuellement, introduction du mélange de l'étape iii) dans un emballage ; et

iv) laisser le mélange former un concentré alimentaire dans la forme d'un gel.

13. Procédé selon la revendication 11, dans lequel l'amidon non-gélatinisé est mélangé à une température inférieure à 72°C, encore mieux inférieure à 70°C, bien mieux encore inférieure à 68°C, de préférence supérieure à 53°C, encore mieux supérieure à 55°C.

14. Utilisation d'un concentré alimentaire selon l'une quelconque des revendications 1 à 11 précédentes pour préparer une soupe, une sauce ou un jus de viande.

15. Procédé pour fournir un produit alimentaire prêt à être consommé, comprenant les étapes de :

• a) fourniture d'un concentré alimentaire selon l'une quelconque des revendications 1 à 10 précédentes,

• b) mélange d'au moins une partie du concentré alimentaire à une phase aqueuse pour le diluer, de préférence à de 20 g/L à 350 g/L,

• c) chauffage du mélange résultant de l'étape b) à une température supérieure à la $T_{début}$ Ref de l'amidon utilisé, afin de réaliser une augmentation de viscosité du mélange pour résulter en un produit alimentaire prêt à être consommé, sur quoi la dilution dans l'étape b) est de préférence de 20 g/L à 350 g/L et encore mieux de 50 à 250 g/L.

FIG 1.

FIG 2A

FIG 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1602289 A
- WO 2004049822 A
- WO 2012097930 A
- WO 2012097918 A
- WO 2012097934 A
- WO 2014053287 A
- WO 2014053288 A
- WO 2014009079 A
- EP 1962619 A

**Non-patent literature cited in the description**

- Industrial microscopy of starches. In: Starch: Chemistry and Technology. **SNYDER,EM.** Food Science and Technology. Academic Press, 1984, 661-673
- Method Starc.03-Starch Identification (Microscopy)-B25. Analytical Methods of the Member Companies of the Corn Refiners Association, Inc, 1991
- **BILIADERIS et al.** Starch gelatinisation phenomena studied by differential scanning calorimetry. *Journal of Food Science,* 1980, vol. 45, 1669-1674
- Structural Transitions and Related Physical Properties of Starch. In: Starch. **BILIADERIS,C.G.** Food Science and Technology. Academic Press, 2009, 293-372
- **TESTER, R.F. ; DEBON, S.J.J.** Annealing of starch - a review. *International Journal of Biological Macromolecules,* 2000, vol. 27, 1-12
- **STUTE,R.** Hydrothermal Modification of Starches: The Difference between Annealing and Heat/Moisture -Treatment. *Starch/Starke,* 1992, vol. 44, 205-214
- Annealing of starch - a review. *International Journal of Biological Macromolecules,* vol. 27, 1-12
- **WANG,W.J. ; POWELL,A.D. ; OATES,C.G.** Effect of annealing on the hydrolysis of sago starch granules. *Carbohydrate Polymers,* 1997, vol. 33, 195-202
- **JAYAKODY,L. ; HOOVER,R.** Effect of annealing on the molecular structure and physicochemical properties of starches from different botanical origins: A review. *Carbohydrate Polymers,* 2008, vol. 74, 691-703
- Gums and Stabilisers for the Food Industry 6. Oxford University Press, 1992